(19)

Europäisches
Patentamt

European
Patent Office

Office européen
des brevets

(11) **EP 4 576 236 A1**

(12) **EUROPEAN PATENT APPLICATION**

(43) Date of publication:
**25.06.2025 Bulletin 2025/26**

(21) Application number: 24221072.2

(22) Date of filing: **18.12.2024**

(51) International Patent Classification (IPC):
*H01M 4/04* (2006.01)    *H01M 4/36* (2006.01)
*H01M 4/485* (2010.01)    *H01M 10/054* (2010.01)
*H01M 10/0568* (2010.01)    *H01M 4/02* (2006.01)

(52) Cooperative Patent Classification (CPC):
**H01M 4/0404; H01M 4/0435; H01M 4/364;**
**H01M 4/485; H01M 10/054; H01M 10/0568;**
H01M 2004/027; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.12.2023 US 202363612771 P**

(71) Applicant: **The Regents of The University of California**
**Oakland, CA 94607 (US)**

(72) Inventors:
• **Ceder-Persson, Kristin A.**
  **Orinda, 94563 (US)**
• **Ceder, Gerbrand**
  **Orinda, 94563 (US)**
• **Sari, Dogancan**
  **Santa Clara, 95050 (US)**
• **Chen, Qian**
  **Emeryville, CA 94608 (US)**
• **Huang, Jianping**
  **Walnut Creek, 94598 (US)**

(74) Representative: **Forresters IP LLP**
**Skygarden**
**Erika-Mann-Straße 11**
**80636 München (DE)**

(54) **MGCUV2O6 AS CATHODE MATERIALS FOR MAGNESIUM ION BATTERIES**

(57) Systems and methods are provided for a magnesium-ion battery (1200). The magnesium-ion battery (1200) includes an anode (1206), a cathode (1202), and an electrolyte in fluid contact with the anode (1206) and cathode (1202). The cathode includes $CuV_2O_6$ and the electrolyte includes magnesium ions (1208).

EP 4 576 236 A1

**Description**

CROSS-REFERENCE TO RELATED APPLICATIONS

The present application claims priority to U.S. Provisional Application No. 63/612,771 entitled "MGCUV2O6 AS CATHODE MATERIALS FOR MAGNESIUM ION BATTERIES", filed on December 20, 2023. The entire contents of the above-listed application are hereby incorporated by reference for all purposes.

TECHNICAL FIELD

The present description pertains generally to cathode materials for magnesium ion batteries, which can potentially be used as energy storage for applications including electric vehicles, grid-level energy storage, and portable electronics.

BACKGROUND AND SUMMARY

In the last decades, Li-ion batteries (LIBs) have undergone significant progress and played a major role in revolutionary advances in many technologies, including energy-dense portable devices and electric vehicles by providing high energy and power. The remarkable growth of Li-ion batteries is now hampered by resource concerns regarding high quality Li and redox-active transition metals including Co and Ni. Therefore, increasing research investment is being placed in the development of alternative battery systems. Multivalent (Mg, Ca, Al, and Zn) systems have been extensively studied for many years due to their potential for high volumetric capacity enabled by the metal anode, potential lower cost, and higher availability of electroactive components (Li-, Co-, and Ni-free) compared to those of LIBs. Despite these numerous advantages, several challenges remain concerning the implementation of multivalent-ion batteries. One such challenge is the poor diffusion kinetics of multivalent ions in solid phases at room temperature, thereby necessitating the discovery of new material structures and chemistries that promote the high mobility of multivalent ions.

Several research groups have introduced promising cathode candidates for Mg-ion batteries. Some of these compounds, especially the sulfide- and selenide-based cathodes, can provide specific capacities over 100 mAh/g ($Mo_6S_8$, $Ti_2S_4$, etc.); however, their low working voltage limits the energy content challenges. Therefore, the exploration of new compounds that reversibly store Mg at a high voltage, and with a high capacity is demanded.

The inventors have recognized the above listed challenges and herein identified materials and method to at least partially solve the challenges. In one example, a magnesium-ion battery, comprising: an anode; a cathode; and an electrolyte in fluid contact with the anode a cathode, wherein the cathode is comprised of $CuV_2O_6$ and the electrolyte includes magnesium ions. Additionally, a method of producing a magnesium-ion battery including a cathode comprising coating a cathode mixture including $CuV_2O_6$, conductive carbon, and a binder to obtain a cathode film; and assembling the magnesium-ion battery including the cathode film, an anode, and an electrolyte. In this study, $CuV_2O_6$ is identified as a material of interest using a previously reported high-throughput computation screening method from the Materials Project Database and its properties experimentally evaluated as a cathode material for Mg-ion batteries. The $CuV_2O_6$ cathode may provide a reversible specific capacity of 100 mAh/g with an average voltage of 2.1 V vs. $Mg^{2+}$/Mg, resulting in a specific energy of 210 Wh/kg, effectively doubling that of the well-known Chevrel ($Mo_6S_8$) phase.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

The present disclosure will be better understood from reading the following description of non-limiting embodiments, with reference to the attached drawings, wherein below:

FIG. 1 illustrates a flow diagram of an example process for synthesizing pure phase $CuV_2O_6$ with a hydrothermal method;
FIG. 2 illustrates an example of an XRD pattern of pure phase $CuV_2O_6$ synthesized via the hydrothermal method;
FIG. 3 illustrates a flow diagram describing a process for fabricating a 2-electrode coin cell.
FIG. 4 illustrates an example of an electrochemical cycling data of hydrothermally synthesized $CuV_2O_6$ in a cell with activated carbon anode and 0.5M $Mg(TFSI)_2$ / 1M Diglyme / TTE electrolyte;
FIG. 5 illustrates examples of XRD patterns of $CuV_2O_6$ in pristine, discharged, and charged conditions;

# EP 4 576 236 A1

FIG. 6 illustrates an example of Vanadium K-edge XAS spectra of pristine, discharged, and re-charged $CuV_2O_6$;

FIG. 7 illustrates an example of Copper K-edge XAS spectra of pristine, discharged, and re-charged $CuV_2O_6$

FIG. 8 illustrates TEM/EDS maps of $CuV_2O_6$ in a discharged condition;

FIG. 9 illustrates high magnification TEM/EDS maps of $CuV_2O_6$ in a discharged condition;

FIG. 10 illustrates an example comparison of formation energy and voltage of a magnesiation process of $CuV_2O_6$ for an intercalation reaction and a displacement reaction as predicted from DFT calculations; and

FIG. 11 illustrate an example volume change during a magnesiation process of $CuV_2O_6$ for an intercalation reaction and a displacement reaction as predicted from DFT calculations.

FIG. 12 illustrates an example of a magnesium-ion battery including a cathode comprised of $CuV_2O_6$.

## DETAILED DESCRIPTION

The following description relates to a merely for convenience and brevity and should not be construed as an inflexible limitation on the scope of any embodiments.

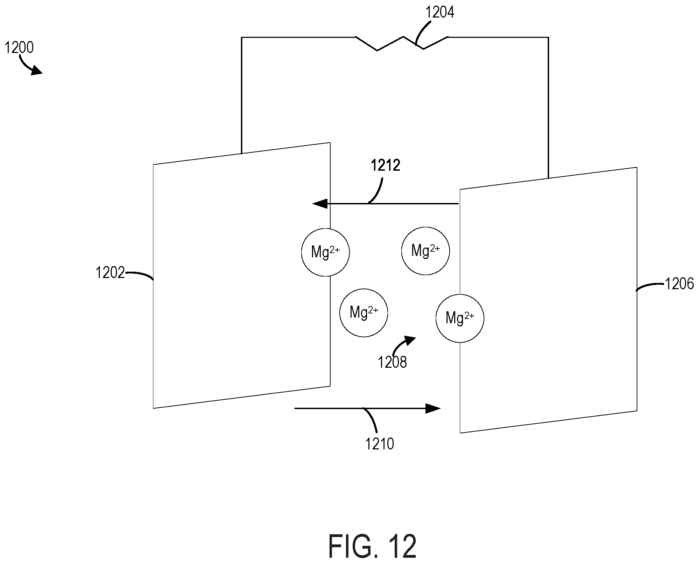

Magnesium-ion batteries are considered a promising alternative to traditional lithium-ion batteries due to their theoretical high energy density, low cost and high availability. An illustration of a magnesium-ion battery is shown in FIG. 12. A significant challenge for Mg-ion batteries recognized by the inventors is the lack of high-performance cathode materials. Therefore, the development of new cathode materials that can improve the performance of Mg-ion batteries is demanded to unlock the full potential of it for a wide range of application such as electric vehicles and grid-scale energy storage.

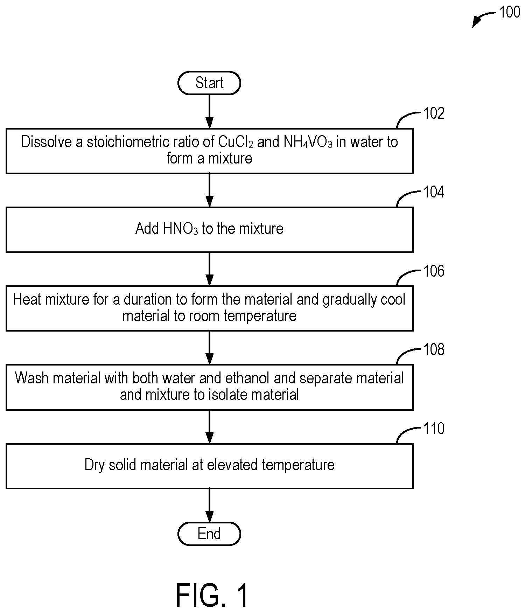

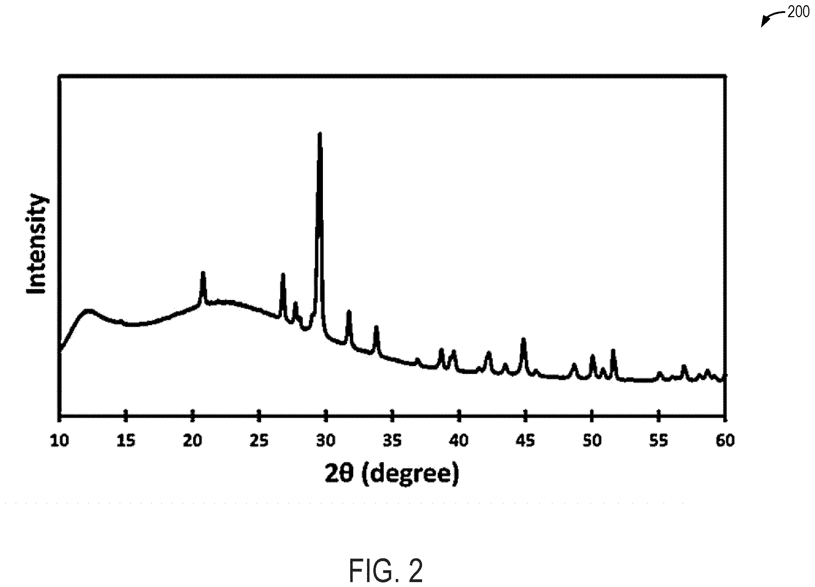

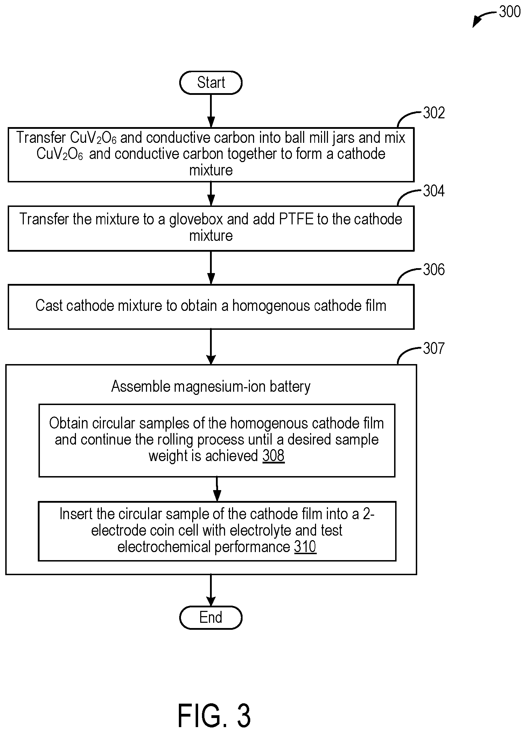

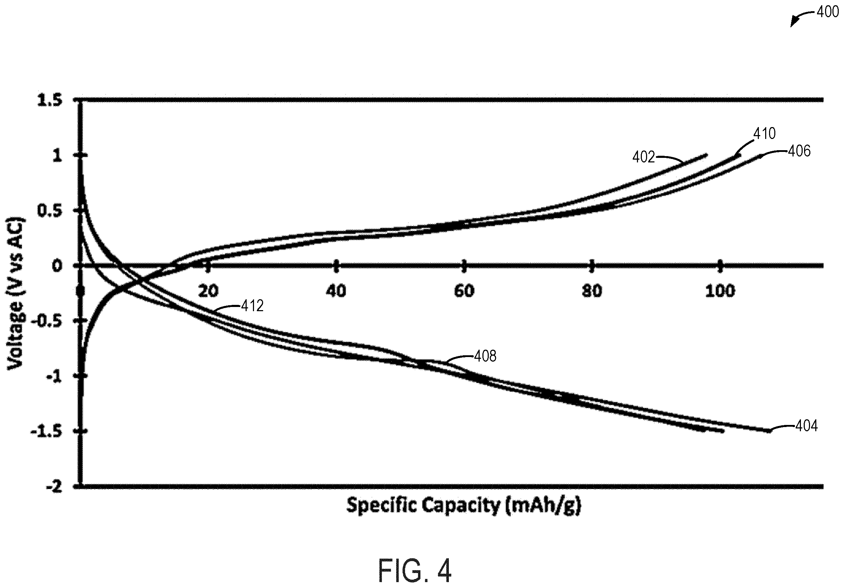

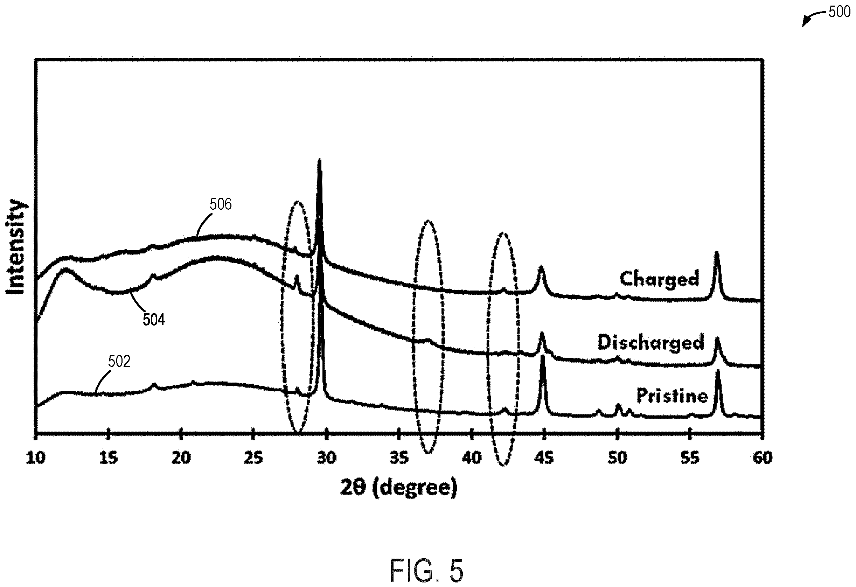

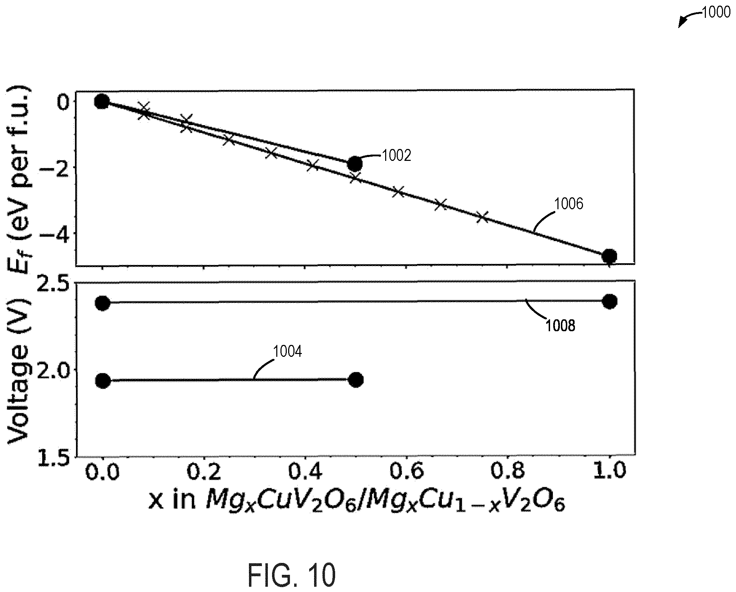

$CuV_2O_6$ has been previously studied in the literature with an emphasis on their electrochemical properties as lithium and zinc cathodes. Surprisingly, $CuV_2O_6$ may also be used as a cathode material for magnesium ion batteries. A flowchart of an example of a hydrothermal method for synthesizing $CuV_2O_6$ for use in a magnesium-ion battery is shown in FIG. 1 and XRD characterization of the resulting material is shown in FIG. 2. A flowchart of an example of method for incorporation the $CuV_2O_6$ into a cathode and assembly into a magnesium-ion battery is shown in FIG 3. As the cathode material, $CuV_2O_6$ delivers a reversible capacity of 100 mAh/g at an average voltage of 2.1 V in a Mg cell, resulting in a high energy density of 210 Wh/kg as illustrated in charging and discharging curves shown in FIG. 4. A SEM-EDS analysis confirms that the magnesium content change during a cycling process corresponds to approximately 0.5 magnesium per formula unit. Further characterization of the charged and discharged $Cu_2V_2O_6$ by XRD, XAS, and TEM is shown in FIGS. 5-9. Additionally, $CuV_2O_6$ exhibits sufficient structural stability during a cycling process as confirmed by negligible volume change during a charge/discharge process. The proposed chemical changes in the $CuV_2O_6$ during discharging is further investigated by calculation as illustrated in FIG. 10.

$CuV_2O_6$ was also identified as a promising Mg cathode candidate through a computational screening methodology. The following properties were calculated with density functional theory (DFT) calculations through this screening methodology. All DFT calculations were performed with the Vienna Ab initio Software Package (VASP). The DFT calculation details for the magnesiation process of $CuV_2O_6$ are as follows. Electron-ion interactions were described with the Perdew-Burke-Ernzerhof (PBE) generalized-gradient approximation (GGA) function in conjunction with projector augmented (PAW) pseudopotentials. A Hubbard U correction of $U_v$ = 3.25 eV was used to account for strong electron-electron interactions. A plane-wave cutoff energy was set to 520 eV, and a gamma k-point mesh with a minimal density of 1000 per reciprocal atom was used to sample a Brillouin zone. Spin polarization was included in the DFT calculation. Structural relaxations were performed for $3 \times 2 \times 2$ supercells that contain 12 formula units with forces converging to within 0.02 eV/A°.

FIG. 1 illustrates a method 100 for synthesizing pure phase $CuV_2O_6$ via a hydrothermal synthesis method. At 102, the method 100 includes dissolving a stoichiometric ratio of $CuCl_2$ and $NH_4VO_3$ in water to form a mixture. In some examples, the water may be deionized water. In particular, 0.06 M $CuCl_2$ and 0.12 M $NH_4VO_3$ were dissolved in deionized water in a stoichiometric proportion and mixed together with continuous stirring to ensure uniformity of the mixture. The stoichiometric proportion may provide the stoichiometry for forming $CuV_2O_6$. As such, the stoichiometric ratio may be 1 mole of copper (Cu) for every 2 moles of vanadium (V).

At 104, the method 100 includes adding $HNO_3$ to the mixture. Adding may include mixing a solution of $HNO_3$ into the mixture with continuous stirring. A 0.01 M solution of $HNO_3$ is added to the mixture by continuous stirring, such that $HNO_3$ comprises approximately 1% by volume of the total volume of the mixture.

At 106, the method 100 includes heating the mixture for a duration to form the material and gradually cooling the material to room temperature. Heating may include heating to an elevated temperature to cause a reaction between the $CuCl_2$ and $NH_4VO_3$. As one example, heating may include heating to 220°C. The duration may be long enough for the reaction to go to completion. As one example, the duration may be 24 hours. For example, the mixture may be placed in a Teflon container in an autoclave where the mixture is heated to 220° C for 24 hours to facilitate the hydrothermal reaction to synthesize the material (e.g., $CuV_2O_6$). After 24 hours, the material is gradually cooled to room temperature. For example, the material may be cooled by leaving at room temperature until the temperature of the material equilibrates.

At 108, the method includes washing the material with both water and ethanol and separating the material and the mixture to isolate a solid material. In some examples the wash water may be deionized water. After washing the material with deionized water and ethanol to remove impurities, a mixture including the deionized water, ethanol, and $CuV_2O_6$ (e.g., the material) is formed. The material and the mixture may be separated to isolate the material. Separation may include separating by a solid/liquid separation technique. For example, to isolate the solid $CuV_2O_6$, the mixture may be centrifuged to collect the solid $CuV_2O_6$. At 110, the method 100 includes drying solid material at elevated temperature. The elevated temperature may be higher than room temperature to expedite the drying process but not high enough to cause further reactions of the material. For example, the elevated drying temperature may be 70°C. As one example, to remove any additional deionized water adhering to and/or absorbed by the solid material, the solid material is dried at 70° C overnight. Once dried, solid pure phase $CuV_2O_6$ is used to fabricate the magnesium battery. The method 100 then ends.

An XRD pattern 200 is shown in FIG. 2. The XRD pattern 200 confirms that the hydrothermal process of FIG. 1 synthesized high purity $CuV_2O_6$.

Turning briefly to FIG. 12, a simplified diagram of a magnesium-ion battery 1200 is shown. Magnesium-ion battery 1200 may include a cathode 1202 electrically coupled via a load or charger 1204 to an anode 1206. An electrolyte including magnesium ions 1208 may be in fluid contact with both the anode and cathode. The cathode may include electroactive material in addition to conductive additive and binder. In one example, the electroactive material may be $CuV_2O_6$. In one example, the conductive additive may be carbon. As one example, the binder may be PTFE. In one example, magnesium ions 1208 of the electrolyte may be provided by magnesium salts, such as but not limited to bis(trifluoromethanesulfonimide) $(Mg(TFSI)_2)$ salts. The electrolyte may further include a solvent and one or more additives. For example, the solvent of the electrolyte may be 1,1,2,2-tetrafluoroethyl-2,2,3,3,-tetrafluoropropyl ether (TTE). In some examples, the additive may be diglyme. When charging, the magnesium ions may travel in the direction indicated by arrow 1210 and may be removed from the cathode and insert and/or intercalate into the anode. When discharging ions may travel in the direction indicated by arrow 1212 and may be removed from the anode and insert into the cathode. Insertion of the magnesium ions into the $CuV_2O_6$ electroactive material of the cathode may occur via displacement of $Cu^{2+}$ into $Cu^0$ by the $Mg^{2+}$ ions as described further below.

FIG. 3 shows a method 300 for fabricating a 2-electrode coin cell from a material such as the $CuV_2O_6$ synthesized via method 100 described above. The 2-electrode coin cell may be an example of a magnesium-ion battery such as magnesium-ion battery 1200 of FIG. 12. At 302, the method 300 includes transferring $CuV_2O_6$ and conductive carbon into ball mill jars and mixing $CuV_2O_6$ and conductive carbon together to form a cathode mixture. More specifically, 140 mg $CuV_2O_6$ powder and 40 mg of conductive carbon were transferred to the ball mill jars under an argon atmosphere. The $CuV_2O_6$ powder and conductive carbon were mixed with a planetary ball milling for a duration of 3 hours, the planetary ball milling being performed at a rotation speed of 300 rpm.

At 304, the method 300 includes transferring the mixture to a glovebox and adding polytetrafluoroethylene (PTFE) to the cathode mixture. In this way, the mixture may include a binder. The binder may be a PTFE binder. After 20 mg of PTFE was added to the mixture, additional mixing of the mixture was performed in the glovebox. For example, adding may include mixing the PTFE with the cathode mixture with a mortar and pestle for an additional 30 minutes. At 306, the method 300 includes casting the cathode mixture to obtain a homogeneous cathode film. Casting may include a process to evenly distribute the cathode mixture on a substrate, such as a current collector. As one example, casting may include performing a rolling process on the cathode mixture to obtain a homogenous cathode film. The rolling process may be performed several times (e.g., 8-10 times) on a stainless steel plate to ensure full polymerization of the binder (e.g., PTFE) and ensure homogenous distribution of all components in the mixture.

At 307, method 300 includes assembling the magnesium ion-battery. Assembling may include constructing the magnesium-ion battery to include a cathode, an anode, and an electrolyte. In one example, assembling may include, at 308, obtaining circular samples of the homogenous cathode film and continuing the rolling process until a desired sample weight is achieved. The circular samples may be obtained by punching out circular samples with a 1 cm² surface area from the homogenous film. The rolling process continues for each of the circular samples to reduce thickness of the circular sample and increase the surface area of the sample. Afterwards, the circular samples may be punched again to obtain circular samples with a 1 cm² surface area. The rolling and punching process may continue iteratively until the circular sample weighs 3 mg and has the appropriate surface area (e.g., 1 cm²). Assembling may further include, for example, at 310, inserting the circular sample of the cathode film into a 2-electrode coin cell with electrolyte and testing the electrochemical performance. The electrolyte may be a 0.5M $Mg(TFSI)_2$ / 1M diglyme/ TTE solution and the anode may include activated carbon. The electrochemical tests were performed for $CuV_2O_6$ as Mg cathodes were performed using 0.5M $Mg(TFSI)_2$ / 1M diglyme/ TTE solution as an electrolyte and activated carbon as the anode. Testing may include charging and discharging the magnesium-ion battery. As discussed below, discharging may cause $Mg^{2+}$ to displace $Cu^{2+}$ from the $CuV_2O_6$ cathode material. The method 300 then ends. The charge/discharge curves obtained when testing the electrochemical performance are shown below in FIG. 4.

FIG. 4 shows charge and discharge curves 400 for the first three cycles. A first plot 402 corresponds to a first charging and a second plot 404 corresponds to a first discharging. A third plot 406 corresponds to a second charging and a fourth plot 408 corresponds to a second discharging. A fifth plot 410 corresponds to a third charging and a sixth plot 412 corresponds to third discharging. The charge and discharge curves 400 show a reversible capacity of 100 mAh/g at a rate of 2 mA/g.

FIG. 5 shows ex-situ XRD patterns 500 of $CuV_2O_6$ samples in pristine, discharged, and charged conditions. For an ex-situ analysis, the $CuV_2O_6$ samples were prepared by interrupting the cycling process at certain conditions, such as when discharged and charged. The $CuV_2O_6$ film was removed from the coin cell placed in the argon-filled glovebox at these conditions and washed multiple times with diglyme solvent to remove residual matter.

XRD is performed on the ex-situ $CuV_2O_6$ film when the $CuV_2O_6$ film is in a pristine phase, a discharge phase, and a charge phase and the XRD patterns 500 are the results of the analysis. A first plot 502 corresponds to the pristine $CuV_2O_6$ film. A second plot 504 corresponds to the discharged $CuV_2O_6$ film. A third plot 506 corresponds to the charged $CuV_2O_6$ film. As shown in FIG. 5, the peak shift of $CuV_2O_6$ between the pristine phase, the discharge phase, and the charge phase is relatively small, indicating that small changes in volume occur during the cycling process. In turn, the small volume changes confirm sufficient structural reversibility of $CuV_2O_6$ as the magnesium cathode during the cycling process.

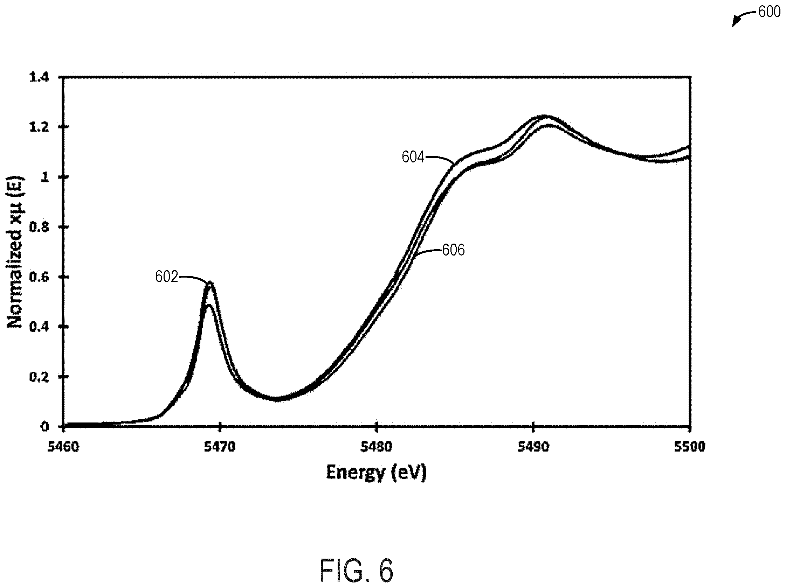

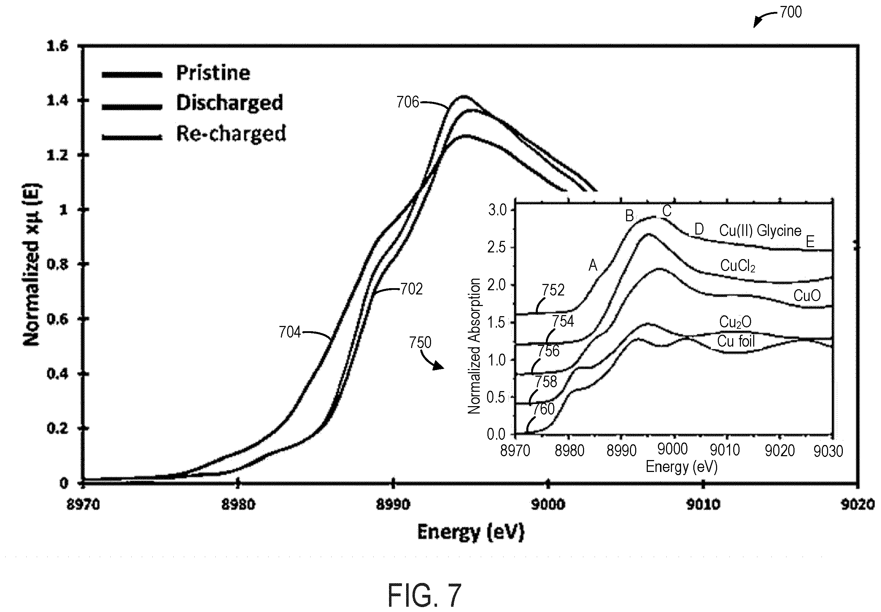

A first X-ray Absorption Spectroscopy (XAS) spectra 600 and a second XAS spectra 700 are shown in FIGS. 6 and 7. X-ray Absorption Spectroscopy (XAS) experiments were performed for pristine, charged, and re-charged $CuV_2O_6$ film samples to investigate redox behavior of $CuV_2O_6$ during the electrochemical cycling process in Mg-ion batteries. Turning to FIG. 6, the first XAS spectra 600 is a Vanadium K-edge XAS spectra. A first plot 602 corresponds to the pristine $CuV_2O_6$ film, a second plot 604 corresponds to a discharged $CuV_2O_6$ film and a third plot 606 corresponds to a charged (e.g., recharged) $CuV_2O_6$ film. The first XAS spectra 600 does not show peak shifting between the pristine, charged, and recharged $CuV_2O_6$ film samples. The absence of peak shifting indicates that the oxidation state of Vanadium remains at 5+ during the cycling process.

Returning to FIG. 7, the second XAS spectra 700 is a Copper K-edge XAS spectra. A first plot 702 corresponds to the pristine $CuV_2O_6$ film. A second plot 704 corresponds to the discharged $CuV_2O_6$ film. A third plot 706 corresponds to the charged (e.g., re-charged) $CuV_2O_6$ film. The second XAS spectra 700 suggest that during magnesium cycling, a reversible redox reaction serves as a governing mechanism of $CuV_2O_6$ as a cathode material in Magnesium-ion batteries. In particular, during the charge/discharge cycles, the reversible redox reaction occurs wherein $Cu^{2+}/Cu^{1+}$ is reduced to $Cu^{1+}/Cu^0$ and $Cu^{1+}/Cu^0$ is oxidized to $Cu^{2+}/Cu^{1+}$. Approximately, half of the copper (e.g., $Cu^{2+}/Cu^{1+}$) in the $CuV_2O_6$ film samples was reduced for the observed capacity (e.g., 100 mAh/g).

An inset graph 750 shows reference Cu K-edge XAS spectra for copper in different matrixes and oxidation states. A first plot 752 corresponds to $Cu^{2+}$:Glycine. A second plot 754 corresponds to $Cu^{2+}$ in $CuCl_2$. A third plot 756 corresponds to $Cu^{2+}$ in CuO. A fourth plot 758 corresponds to $Cu^{1+}$ in $Cu_2O$. A fifth plot 760 corresponds $Cu^0$ in a copper foil. Points A, B, C, D, and E along the spectra highlight identifying features of the XAS spectra. Comparison of the features of graph 750 to those shown in graph 700 may help confirm the analysis as to the changes in copper oxidation state occurring as the $CuV_2O_6$ charges and discharges.

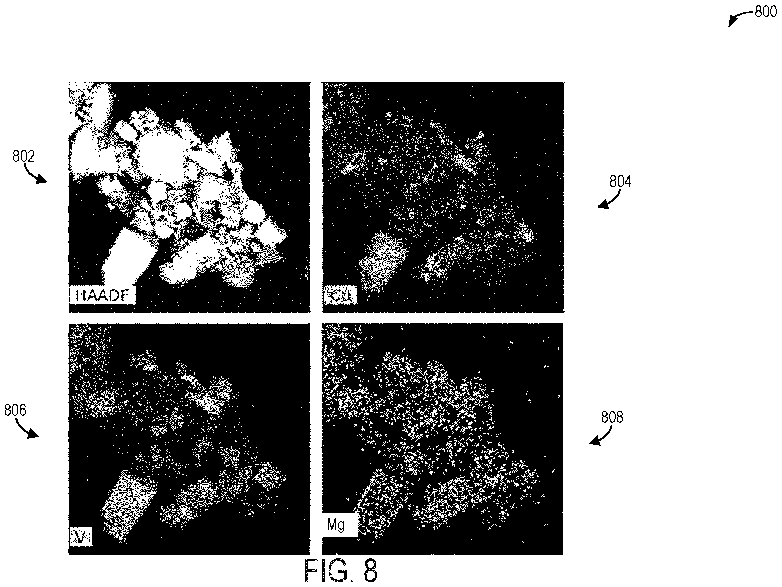

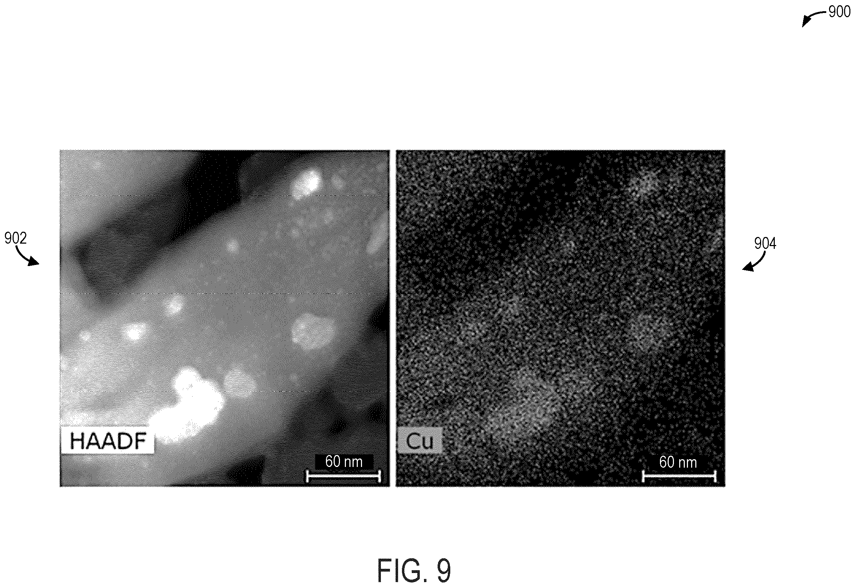

FIG. 8 shows Transmission Electron Microscope (TEM)/Energy Dispersive X-ray Spectroscopy (EDS) maps 800 of $CuV_2O_6$ in a discharged condition and FIG. 9 shows high magnification TEM/EDS Cu maps 900 of the discharged $CuV_2O_6$ Image 802 shows a high-angle annular dark field (HAADF) image of the discharged $CuV_2O_6$. Image 804 shows the image 802 with contrast adjusted according to EDS intensity of Cu. Bright areas of image 804 correspond to areas rich in Cu. Similarly image 806 corresponds to image 802 with contrast adjusted according to EDS intensity of V. Bright areas of image 806 correspond to areas rich in V. A fourth image 808 corresponds to image 802 with contrast adjusted according to EDS intensity of Mg. Bright areas of image 808 correspond to areas rich in Mg. Image 902 of FIG. 9 shows a portion of the discharged $CuV_2O_6$ in a higher resolution than image 802 of FIG. 8. Image 904 shows the image 902 with contrast adjusted according to EDS intensity of Cu. Bright areas of 904 correspond to areas rich in Cu.

In this way, the reversible redox reaction that occurs during the magnesium cycling was analyzed. The results of the TEM and EDS analysis shown in FIGS. 8-9 indicate that copper nanoprecipitates were present in the discharged $CuV_2O_6$ sample, suggesting that $Cu^{2+}$ is reduced to elemental $Cu^0$ to form copper nanoprecipitates during the discharging process. The copper nanoprecipitates may be oxidized back to $Cu^{2+}$ during the charging process to complete the reversible electrochemical cycle.

As described herein, Density Function Theory (DFT) calculations were performed to investigate the magnesiation process in $CuV_2O_6$ as a cathode in a magnesium-ion cell with the simulation parameters described above. In particular, magnesiation of $CuV_2O_6$ was analyzed by comparing energetics for both of an intercalation reaction and a displacement reaction between magnesium and $CuV_2O_6$. Magnesiation of $CuV_2O_6$ by the intercalation reaction is seen below in Equation 1:

$$CuV_2O_6 + xMg \rightarrow Mg_xCuV_2O_6 \qquad (1)$$

Magnesiation of $CuV_2O_6$ by the displacement reaction is seen below in Equation 2:

$$CuV_2O_6 + xMg \rightarrow Mg_xCu_{1-x}V_2O_6 + {}_xCu \qquad (2)$$

Both of the intercalation voltage and the displacement voltage were calculated with Equation 3:

$$V = -\frac{\Delta G}{ne} \; (3)$$

where $\Delta G$ is the free energy change of one of the intercalation reaction and the displacement reaction, n is a number of electrons transferred during the respective reaction, and e is a charge of an electron.

FIG. 10 shows a comparison 1000 between the formation energy and the voltage of the magnesiation process in $CuV_2O_6$ for each of the intercalation reaction and the displacement reaction. Plots 1002 and 1004 correspond to the intercalation reaction and plots 1006 and 1008 correspond to the displacement reaction. The comparison 1000 shows a calculated voltage for the displacement reaction is 2.4 V, which is about 0.5 V higher than a calculated voltage for the intercalation reaction. Additionally, for the same Mg concentrations, a formation energy of the displacement reaction is lower than a formation energy of the intercalation reaction. A lower formation energy for the displacement reaction indicates that the magnesiation of $CuV_2O_6$ via the displacement reaction is more thermodynamically favorable than via the intercalation reaction, which is consistent with electrochemical experiments that determined that Cu nanoprecipitates were formed after the discharge cycle. The presence of the Cu nanoprecipitates formed via the displacement reaction suggest that the displacement reaction is more favorable than the intercalation reaction which does not produce Cu nanoprecipitates.

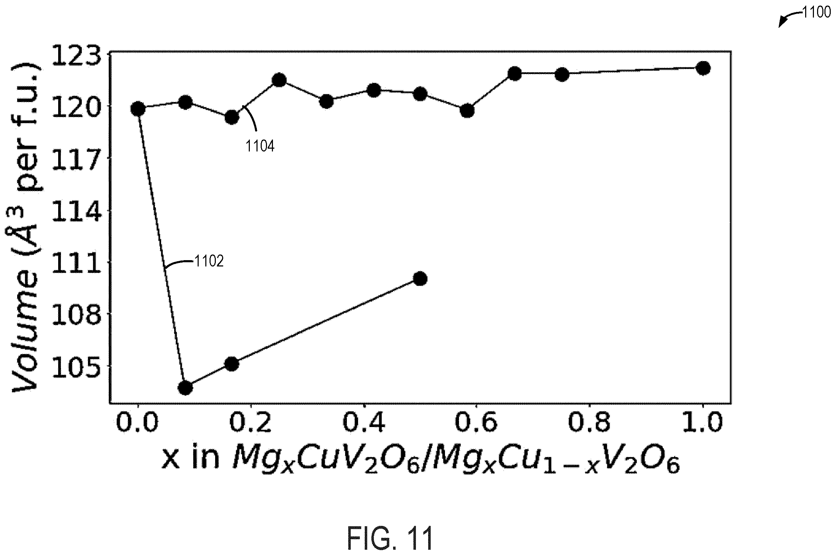

FIG. 11 illustrates volume changes 1100 observed during the magnesiation process of $CuV_2O_6$ in each of the intercalation reaction and the displacement reaction. Plot 1102 corresponds to the intercalation reaction and plot 1104 corresponds to the displacement reaction. In particular, the volume changes 1100 for each of the intercalation reaction and the displacement reaction show a relationship between volume and different Mg concentrations. A larger volume change of approximately 15% is associated with the intercalation reaction. The larger volume change makes magnesiation of $CuV_2O_6$ with the intercalation reaction undesirable for magnesium-ion batteries due to the insufficient structural stability of $CuV_2O_6$. In contrast, a smaller volume change is observed with magnesiation of $CuV_2O_6$ with the displacement reaction, which is consistent with the ex-situ XRD pattern results. As such, magnesiation of $CuV_2O_6$ with the displacement reaction yields adequate structural stability of $CuV_2O_6$.

The technical effect of the methods described herein is to produce a magnesium-ion battery including $CuV_2O_6$ as a high performing cathode active material. The magnesium-ion battery including $CuV_2O_6$ as the cathode active material results in a high (e.g., 100 mAh/g) reversible energy capacity. Further, the high voltage (e.g., 2.1V vs Mg) provided by the $CuV_2O_6$ cathode active material results in a high energy density of 210 Wh/kg. Additionally, the $CuV_2O_6$ cathode active material provides good structural stability for the magnesium-ion battery due to a negligible volume change of the $CuV_2O_6$ cathode active material during the charge/discharge process.

The disclosure also provides support for a magnesium-ion battery, comprising: an anode, a cathode, and an electrolyte in fluid contact with the anode and cathode, wherein the cathode is comprised of $CuV_2O_6$ and the electrolyte includes magnesium ions. In a first example of the system, the anode is activated carbon. In a second example of the system, optionally including the first example, the cathode further comprises a PTFE binder. In a third example of the system, optionally including one or both of the first and second examples, the cathode wherein the magnesium ions are provided by magnesium bis(trifluoromethanesulfonimide). In a fourth example of the system, optionally including one or more or each of the first through third examples, the electrolyte includes 1,1,2,2-tetrafluoroethyl-2,2,3,3,-tetrafluoropropyl ether (TTE). In a fifth example of the system, optionally including one or more or each of the first through fourth examples, a discharged $CuV_2O_6$ includes copper nanoprecipitates. In a sixth example of the system, optionally including one or more or each of the first through fifth examples, the electrolyte further includes diglyme. In a seventh example of the system, optionally including one or more or each of the first through sixth examples, the cathode further includes conductive carbon.

The disclosure also provides support for a method of producing a magnesium-ion battery including a cathode comprised of $CuV_2O_6$, comprising: casting a cathode mixture including $CuV_2O_6$, conductive carbon, and a binder to obtain a cathode film, and assembling the magnesium-ion battery, the magnesium-ion battery including the cathode film, an anode, and an electrolyte. In a first example of the method, the method further comprises: mixing the $CuV_2O_6$ and conductive carbon by ball milling. In a second example of the method, optionally including the first example, the method further comprises: charging and discharging the magnesium-ion battery, wherein discharging the magnesium-ion battery causes $Mg^{2+}$ to displace $Cu^{2+}$ from the $CuV_2O_6$. In a third example of the method, optionally including one or both of the first and second examples, the method further comprises: synthesizing the $CuV_2O_6$ via hydrothermal synthesis. In a fourth example of the method, optionally including one or more or each of the first through third examples, the hydrothermal synthesis includes dissolving a stoichiometric ratio of $CuCl_2$ and $NH_4VO_3$ in water to form a mixture. In a fifth example of the method, optionally including one or more or each of the first through fourth examples, the hydrothermal synthesis includes adding $HNO_3$ to the mixture. In a sixth example of the method, optionally including one or more or each of the first through fifth examples, the hydrothermal synthesis includes heating the mixture to 220°C.

The description of a range herein should be considered to have specifically disclosed all the possible subranges as well of any individual numerical values within that range to the tenth of the unit of the lower limit unless the context clearly dictates otherwise. For example, description of a range such as from 1 to 6 should be considered to have specifically disclosed subranges such as from 1 to 3, from 1 to 4, from 1 to 5, from 2 to 4, from 2 to 6, from 3 to 6 etc., as well of any individual values within that range, for example, 1.1,2, 2.3, 5, and 5.9. This applies regardless of the breadth of the range. The upper and lower limits of these intervening ranges may independently be included in the smaller ranges, and are also encompassed within the invention, subject to any specifically excluded limit in the stated range. Where the stated range includes one or both of the limits, ranges excluding either or both of those included limits are also included in the invention, unless the context clearly dictates otherwise.

The terminology used herein is for the purpose of describing particular embodiments only and is not intended to be limiting of any embodiment. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

The previously described versions of the disclosed subject matter have many advantages that were either described or would be apparent to a person of ordinary skill. Even so, these advantages or features are not required in all versions of the disclosed apparatus, systems, or methods.

Additionally, this written description makes reference to particular features. It is to be understood that the disclosure in this specification includes all possible combinations of those particular features. Where a particular feature is disclosed in the context of a particular aspect or example, that feature can also be used, to the extent possible, in the context of other aspects and examples.

Also, when reference is made in this application to a method having two or more defined steps or operations, the defined steps or operations can be carried out in any order or simultaneously, unless the context excludes those possibilities.

Although specific examples of the invention have been illustrated and described for purposes of illustration, it will be understood that various modifications may be made without departing from the spirit and scope of the invention.

In an aspect of the present disclosure, there is provided:

Rechargeable multivalent-ion batteries are attractive alternatives to Li-ion batteries to mitigate their issues with metal resources and metal anodes. However, many ongoing challenges remain regarding their practical use due to the low solid-state mobility of multivalent ions. In this study, we investigate a promising material identified by high-throughput computational screening and experimental screening, $CuV_2O_6$, as a Mg cathode. We evaluate and experimentally prove that $CuV_2O_6$ can provide an energy density of >200 Wh/kg, more than twice that of state-of-the-art Chevrel compounds.

In some aspects of the present disclosure, there are provided the following clauses:

Clause 1: The $CuV_2O_6$ is identified as a cathode material for Magnesium ion batteries.

Clause 2: As experimentally determined, it provides 0.5 Mg inserted every formula unit.

Clause 3: Electrochemical experiments have shown that this material delivers a reversible capacity of 100 mAh/g at an average voltage of 2.1 V, resulting in a high energy density of 210 Wh/kg.

Clause 4: It exhibits sufficient structural stability during the charging/discharging process.

Clause 5: These properties make it a promising candidate for use in next-generation Mg-ion batteries, which have the potential to provide high energy density and low cost compared to existing battery technologies.

## Claims

1. A magnesium-ion battery (1200), comprising:

    an anode (1206);
    a cathode (1202); and
    an electrolyte in fluid contact with the anode (1206) and cathode (1202), wherein the cathode is comprised of $CuV_2O_6$ and the electrolyte includes magnesium ions (1208).

2. The magnesium-ion battery of claim 1, wherein the anode is activated carbon.

3. The magnesium-ion battery of claim 1 or 2, wherein the cathode further comprises a PTFE binder.

4. The magnesium-ion battery of any of claims 1 to 3, wherein the cathode wherein the magnesium ions are provided by magnesium bis(trifluoromethanesulfonimide).

5. The magnesium-ion battery of any of claims 1 to 4, wherein the electrolyte includes 1,1,2,2-tetrafluoroethyl-2,2,3,3,-tetrafluoropropyl ether (TTE).

6. The magnesium-ion battery of any of claims 1 to 5, wherein a discharged $CuV_2O_6$ includes copper nanoprecipitates.

7. The magnesium-ion battery of any of claims 1 to 6, wherein the electrolyte further includes diglyme.

8. The magnesium-ion battery of any of claims 1 to 7, wherein the cathode further includes conductive carbon.

9. A method of producing a magnesium-ion battery including a cathode comprised of $CuV_2O_6$, comprising:

   casting (306) a cathode mixture including $CuV_2O_6$, conductive carbon, and a binder to obtain a cathode film; and assembling (307) the magnesium-ion battery, the magnesium-ion battery including the cathode film, an anode, and an electrolyte.

10. The method of claim 9, further comprising mixing the $CuV_2O_6$ and conductive carbon by ball milling.

11. The method of claim 9 or 10, further comprising charging and discharging the magnesium-ion battery, wherein discharging the magnesium-ion battery causes $Mg^{2+}$ to displace $Cu^{2+}$ from the $CuV_2O_6$.

12. The method of claim any of claims 9 to 11, further comprising synthesizing the $CuV_2O_6$ via hydrothermal synthesis.

13. The method of claim 12, wherein the hydrothermal synthesis includes dissolving a stoichiometric ratio of $CuCl_2$ and $NH_4VO_3$ in water to form a mixture.

14. The method of claim 13, wherein the hydrothermal synthesis includes adding $HNO_3$ to the mixture.

15. The method of claim 14, wherein the hydrothermal synthesis includes heating the mixture to 220°C.

FIG. 1

200

FIG. 2

2θ (degree)

Intensity

300

Start

302

Transfer $CuV_2O_6$ and conductive carbon into ball mill jars and mix $CuV_2O_6$ and conductive carbon together to form a cathode mixture

304

Transfer the mixture to a glovebox and add PTFE to the cathode mixture

306

Cast cathode mixture to obtain a homogenous cathode film

307

Assemble magnesium-ion battery

Obtain circular samples of the homogenous cathode film and continue the rolling process until a desired sample weight is achieved 308

Insert the circular sample of the cathode film into a 2-electrode coin cell with electrolyte and test electrochemical performance 310

End

FIG. 3

FIG. 4

FIG. 5

EP 4 576 236 A1

FIG. 6

EP 4 576 236 A1

FIG. 7

EP 4 576 236 A1

FIG. 8

FIG. 9

FIG. 10

FIG. 11

EP 4 576 236 A1

FIG. 12

EP 4 576 236 A1

Europäisches
Patentamt

European
Patent Office

Office européen
des brevets

# EUROPEAN SEARCH REPORT

**Application Number**

EP 24 22 1072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0086215 A (KOREA ELECTRIC POWER CORP [KR] ET AL.) 8 July 2021 (2021-07-08) | 1-15 | INV. H01M4/04 |
| Y | * paragraphs [0003], [0067] - [0069], [0111] - [0114] * | 1-15 | H01M4/36 H01M4/485 H01M10/054 |
| Y | US 2019/067743 A1 (VAUGHEY JOHN T [US] ET AL) 28 February 2019 (2019-02-28) * paragraphs [0023], [0025], [0032] - [0038], [0043] * | 1-15 | H01M10/0568 H01M4/02 |
| A | LIU YUYI ET AL: "Graphene Oxide Wrapped CuV2O6 Nanobelts as High-Capacity and Long-Life Cathode Materials of Aqueous Zinc-Ion Batteries ¦ ACS Nano", ACS NANO, [Online] vol. 13, no. 10, 25 September 2019 (2019-09-25), pages 12081-12089, XP093272822, US ISSN: 1936-0851, DOI: 10.1021/acsnano.9b06484 Retrieved from the Internet: URL:https://pubs.acs.org/doi/10.1021/acsnano.9b06484> [retrieved on 2025-04-25] * the whole document * | 9-15 | |
| A | JIANG XUE ET AL: "Hydrothermal synthesis of new CuVO2 delafossite hexagonal nanoplates", CERAMICS INTERNATIONAL, ELSEVIER, AMSTERDAM, NL, [Online] vol. 46, no. 18, 1 August 2020 (2020-08-01), pages 28219-28226, XP086322577, ISSN: 0272-8842, DOI: 10.1016/J.CERAMINT.2020.07.322 [retrieved on 2025-04-25] * the whole document * | 9-15 | |

TECHNICAL FIELDS SEARCHED (IPC)

H01M

The present search report has been drawn up for all claims

| Place of search | Date of completion of the search | Examiner |
|---|---|---|
| Munich | 25 April 2025 | Monti, Adriano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1072

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | Publication date | Patent family member(s) | Publication date |
|---|---|---|---|
| KR 20210086215 A | 08-07-2021 | NONE | |
| US 2019067743 A1 | 28-02-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63612771